# EUROPEAN PATENT SPECIFICATION

(11) **EP 3 901 502 B1**
(45) Date of publication and mention of the grant of the patent: **10.12.2025**
(21) Application number: 20170668.6
(22) Date of filing: 21.04.2020
(51) Int. Cl.: F16L 3/10, F16L 3/123, F16B 21/06, F16B 21/08, B60R 16/02, B60R 16/08

(54) **PRE-ASSEMBLED FLUID LINE ARRANGEMENT AND ATTACHMENT METHOD**
VORMONTIERTE FLUIDLEITUNGSANORDNUNG UND BEFESTIGUNGSVERFAHREN
AGENCEMENT DE LIGNE DE FLUIDE PRÉASSEMBLÉ ET PROCÉDÉ DE FIXATION

(43) Date of publication of application: 27.10.2021
(73) Proprietor: Cooper-Standard Automotive (Deutschland) GmbH, 89601 Schelklingen (DE)
(72) Inventor: Guersing, Ludovic, 57550 Dalem (FR)
(74) Representative: Witte, Weller & Partner Patentanwälte mbB

(56) References cited:
- EP-A1- 3 203 129
- IT-A1- TO20 140 106
- US-A- 4 386 752
- US-A1- 2012 318 935

## Description

The present invention relates to a pre-assembled fluid line arrangement, comprising a fluid line for guiding fluid and at least one plastic clip.

Also, the present invention relates to a method of attaching a longitudinal element, particularly a fluid line, to a perforated sheet part, using a plastic clip.

A plastic clip for attaching a fuel line to a body part of a vehicle is known from document DE 11 2011 0023 828 B4.

US 2012/318935 A1 discloses a clip or fastener used to retain tubing and cabling in automobile vehicles.

The prior art plastic clip includes a rigid outer clamp and an insert attached to the clamp, wherein the insert is made from a material which is softer than the material of the clamp.

The plastic clip further comprises a stud receptacle, for axially attaching the plastic clip to a stud that protrudes from a body part of the vehicle.

Another holding element for a duct is known from document WO 2018/15889 A1.

In the field of brake lines, it is generally known to attach the brake line at a certain position of its axial extend to a perforated sheet part of a vehicle body, using a metallic bracket with rubber insert. The metallic bracket is assembled on the brake line or brake tube. The metallic bracket includes a fastening hole through which a screw can be inserted. When attaching the brake line to the body sheet part, the screw is screwed into a threaded hole of the sheet part.

The above attachment concept is based on multiple components (bracket, rubber insert, screw, washer, etc). Further, the attachment step can be cumbersome because a screwing tool has to be used, often in an environment where a worker has only little space to insert the screw into the perforated sheet part.

In view of the above, it is an object to provide an improved attachment concept for attaching a longitudinal element to a perforated sheet part of a vehicle, wherein it is preferred if the same perforated sheet part can be used that has been used up to now in combination with the metallic bracket.

The above object is achieved by a pre-assembled fluid line arrangement accoding to claim 1.

Finally, the above object is achieved by a method according to claim 10.

The present invention improves the assembly process of attaching a longitudinal element like a fluid line to a perforated sheet part, particularly a body part of a vehicle.

The perforated sheet part includes a hole, which is preferably provided with an internal thread. While the prior art involved screwing a screw into the threaded hole, in order to attach a metallic bracket, the present invention includes a plastic clip that has a plastic rivet protrusion. The plastic rivet protrusion can be inserted into the hole, particularly a threaded hole. The threaded hole may be the same as has been formally used in combination with the screw and the metallic bracket.

Therefore, the plastic clip replaces both the metallic bracket and the screw, and possibly a washer or the like used in combination therewith.

The plastic rivet protrusion is formed such that it engages in or at a shoulder of a threaded hole, so that the a similar or even a better axial and radial resistance after assembly can be achieved.

In addition, the plastic clip is pre-assembled to the fluid line so as to form a pre-assembled fluid line arrangement. This further facilitates the assembly process.

The rivet protrusion is particularly adapted to resist axial forces of at least 250 N, preferably at least 400 N. Further, external torques of more than o.5 nM, preferably of more than 5 nM can be resisted.

A material for the base portion and the lid portion is preferably PA, particularly PA 66. As a material for the jacket portion, any rubber material or for example TPE (thermoplastic elastomer) is preferred, particularly in a thickness of approximately 1 mm to 2 mm.

The jacket portion is preferably held on the respective base portion or lid portion such that it stays in its specified position during transportation and handling. The jacket portion can be attached to the respective receptacle by means of positive and/or frictional engagement. Further, it is possible to attach the jacket portion to the receptacle by means of an adhesive. Preferably, a 2K-injection molding step is conducted for molding the plastic clip together with the jacket portion in one molding step.

The plastic clip is compliant with thermal requirements as typically occur in vehicle applications. Further, the plastic clip is able to provide an electrical resistance between the fluid line and the body part of the vehicle of at least 100 Ohm.

In the closed configuration, the base portion and the lid portion can hold the longitudinal element such that the clip remains in its position, even if a torque of 1 Nm is applied to the longitudinal element. With an adjustment of 2K jacket thickness, this torque resistance level can be reduced to allow small angular rotation and then improve pre-positioning of the rivet protrusion into the perforated sheet part. Usually, a torque of 0.1 to 0.3 nM is considered to be typical for manual assembly.

The fluid line may be a brake line, an oil line, a fuel line, etc. The fluid line may be rigid or flexible. The term line encompasses a hose, a tube, a pipe, etc.

Semi-circular may define an angle between 100° and 260°, an preferably defines an angle of 180°.

The above object is achieved in full.

In a preferred embodiment, the support portion is provided at an underside of a main part of the base portion and/or the support portion is provided at an extension portion of the base portion.

The extension portion may be a flat portion which extends essentially parallel to a closure plane between the base portion and the lid portion. Preferably, the extension portion extends in a direction transverse to the direction, in which the rivet protrusion projects from the support portion. Preferably, the rivet protrusion and the extension portion are aligned under an angle of 90°.

The extension portion can contribute to a stable attachment to the perforated sheet part.

The base portion and the lid portion may be different parts that are separate from each other in the open configuration.

However, it is preferred if the base portion and the lid portion are connected via an integral hinge.

In this case, the base portion and the lid portion are preferably made in one piece and from the same material. The integral hinge allows to either establish the open configuration or the closed configuration.

According to the invention the base portion and the lid portion, in the closed configuration, are connected via a first connection portion and a second connection portion.

In this embodiment, a longitudinal element can be held by the base portion and the lid portion in the closed configuration with high holding or retention forces.

According to the invention each of the first and the second connection portion comprises a locking nose at one of the base portion and the lid portion, and a shoulder at the other of the base portion and the lid portion.

The connection portion is formed as a locking portion wherein the locking nose is adapted to positively engage the locking shoulder in the closed configuration.

The locking nose may be adapted to be deflected radially when establishing the closed configuration, and to elastically restore its state, in which it engages positively at the locking shoulder.

According to the invention the first and the second connection portion are arranged on opposite sides of the circular holding portion.

In this case, high retention forces can be achieved.

Preferably, one connection portion is arranged in the area of an integral hinge. In this case, the integral hinge may be formed by two hinge portions which are arranged at a distance from each other in a direction parallel to the extension of the longitudinal element (corresponding to a holding axis of the circular holding portion). In this case, it is preferred if the one connection portion is arranged between the two hinge portions of the integral hinge.

Further, it is preferred if the rivet protrusion comprises a shaft. Preferably the shaft is integral with the base portion.

Further, it is preferred if at least one locking tongue is provided in a region of a front tip of the shaft.

Such locking tongue may be able to engage behind a shoulder of the perforated sheet part. Particularly, the locking tongue may be formed such that, when attached to the sheet part, protrudes from a hole of the sheet part and engages a shoulder thereof. As an alternative, the locking tongue may be adapted to engage at the internal thread of the hole of the sheet part.

Further, it is preferred if the shaft has a number of annular undulations.

An outer diameter of an undulation is preferably approximately identical to an inner diameter of the internal thread of the hole of the sheet part. Further, the diameter may be a little larger than the inner diameter of the thread, so that the undulations are deformed when the rivet protrusion is inserted into the threaded hole. Therefore, high axial retention forces can be achieved.

In an alternative embodiment, the rivet protrusion comprises two rivet tongues that are radially spreadable The rivet protrusion and the shaft can be symmetric or asymmetric.

It is in this case preferred if the base portion comprises a hole aligned with the rivet tongue, such that a pin shaft may be inserted between the rivet tongues so as to spread them radially apart from each other.

The pin may a part of the plastic clip and may be made integral with for example the base portion. The step of inserting the pin shaft into the hole and between the rivet tongues may involve ripping off a little web part which integrally connects the base portion and the pin shaft.

While in the first embodiment, the attachment of the plastic clip to the perforated sheet part is made by simply pressing the rivet protrusion into the threaded hole, the second embodiment involves a first step of inserting the rivet protrusion into the threaded hole, and involves a second step of subsequently pushing the pin shaft into the same direction, so as to insert the pin shaft between the rivet tongues and spread them radially apart. Thereby, the rivet tongues may be forced to positively engage the internal thread of the whole. The first step and the second step can preferably be performed in one single axial movement.

In another generally preferred embodiment, the plastic clip is a 2K-plastic clip and/or at least one jacket portion is made of a rubber material or a TP (thermoplastic) material, particularly a thermoplastic elastomeric material (TPE). The TPE may be a TPS material, i.e. a styrenic block copolymer.

It will be understood that the features of the invention mentioned above and those yet to be explained below can be used not only in the respective combination indicated, but also in other combinations or in isolation, without leaving the scope of the present invention.

Exemplary embodiments of the invention are explained in more detail in the following description and are represented in the drawings, in which:
- Fig. 1: is a schematic sectional view of an assembly location where a fluid line is to be assembled to a vehicle body sheet;
- Fig. 1a: is an enlarged schematic view of a plastic clip used for attaching a fluid line to a perforated vehicle body sheet;
- Fig. 2: is a perspective view of another embodiment of a plastic clip;
- Fig. 3: is a side view of the plastic clip of Fig. 2 in the open configuration;
- Fig. 4: is a side view of the plastic clip of Fig. 2 in the closed configuration;
- Fig. 5: is a top view of the plastic clip of Fig. 4;
- Fig. 6: is a sectional view along the plane VI-VI in Fig. 5;
- Fig. 7: is a sectional view along a plane VII-VII in Fig. 5;
- Fig. 8: is a perspective view of another embodiment of a plastic clip;
- Fig. 9: is a side view of the plastic clip of Fig. 8 in an open configuration;
- Fig. 10: is a side view of the plastic clip of Fig. 8 in a closed configuration;
- Fig. 11: is a top view of the plastic clip of Fig. 10;
- Fig. 12: is a sectional view of a plane XII-XII in Fig. 11;
- Fig. 13: is a sectional view of a plane XIII-XIII in Fig. 11;
- Fig. 14: is a perspective view of a pre-assembled fluid line arrangement; and
- Fig. 15: is a detail XV of Fig. 14.

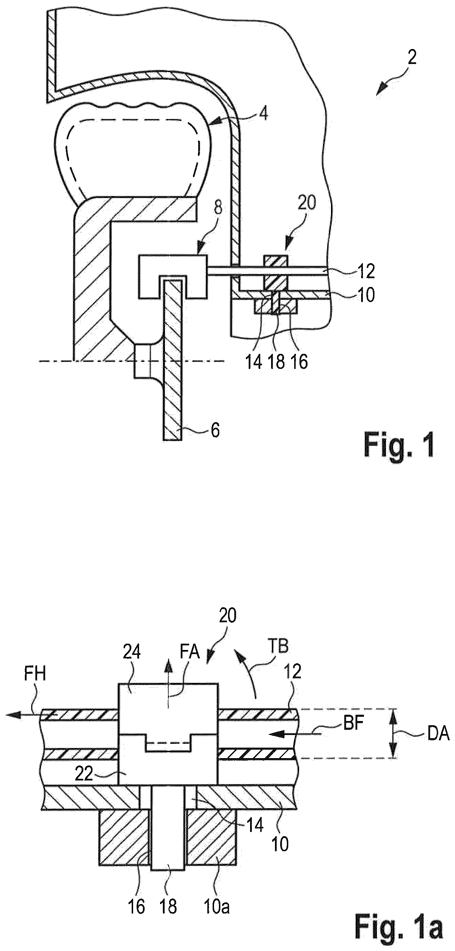

Fig. 1 is a schematic view of an area of a wheel-house of a vehicle 2. A wheel 4 is arranged within the wheel house, wherein the wheel 4 is connected to a brake disk 6.

A brake system 8 includes braking cylinders is assigned to the brake disk 6. The brake system 8 is arranged close to a vehicle body sheet (perforated sheet part) 10.

A brake line/hose (longitudinal element) 12 is connected to the brake system 8. The brake line 12 is connected by means of a plastic clip/bracket 20 to the body sheet 10. Particularly, the body sheet 10 comprises a hole 14, which is preferably provided with an inner thread 16, and the plastic clip 20 is used to connect the brake line 12 to the body sheet 10, wherein a protrusion 18 of the plastic clip 20 extends into the hole 14.

Fig. 1a shows a detail of Fig. 1.

Particularly, it is shown that the plastic clip 20 includes a base portion 22 and a lid portion 24 which are connected to each other so as to enclose and hold the brake line 12.

The brake line 12 itself is used to guide braking fluid BF. The brake line 12 has an outer diameter DA.

As is shown in Fig. 1a, a nut 10a is fixedly connected to an underside of the body sheet 10, wherein the nut 10a includes the inner thread 16. The protrusion 18 extends into the nut 10a.

The attachment of the plastic clip 20 to the body sheet 10 is such that the plastic clip 20 with the brake line 12 can be retained with an force FA of at least 400 N.

In addition, the brake line 12 is held in the plastic clip 20 such that bending torques TB of at least 1 Nm can be sustained. In addition, the brake line 12 is held in the plastic clip 20 such that axial forces FH along the extension of the brake line 12 can be resisted, which exceed 100 N.

The torque resistance of the clip 20 holding the brake line 12 is at least 1 Nm.

In the following description, further embodiments are described which correspond to the above embodiment with regard to design and function. Similar elements are given the same reference numerals. In the following, differences are described.

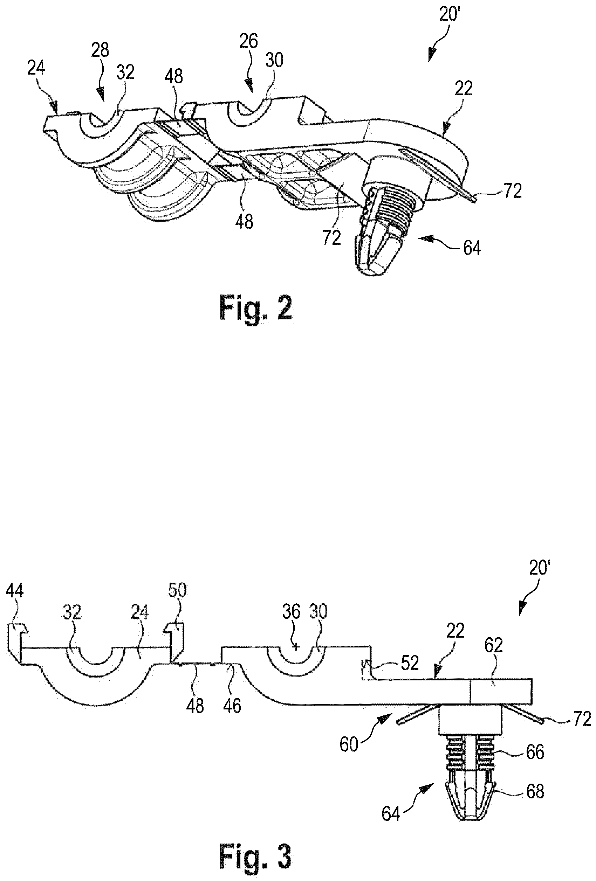

In Figs. 2 to 7, a preferred embodiment of a plastic clip 20' is shown.

The plastic clip 20 includes a base portion 22 and a lid portion 24. The base portion 22 comprises a base receptacle 26 for the longitudinal element 12 (brake line). The lid portion 24 includes a corresponding lid receptacle 28. The receptacles 26, 28 are in each case semi-circular.

The base receptacle 26 is provided with a base jacket portion 30 which is made from a material that is softer than the material of the base receptacle 26 (base portion 22). Correspondingly, the lid receptacle 28 is provided with a lid jacket portion 32 made of the same material as the base jacket portion 30.

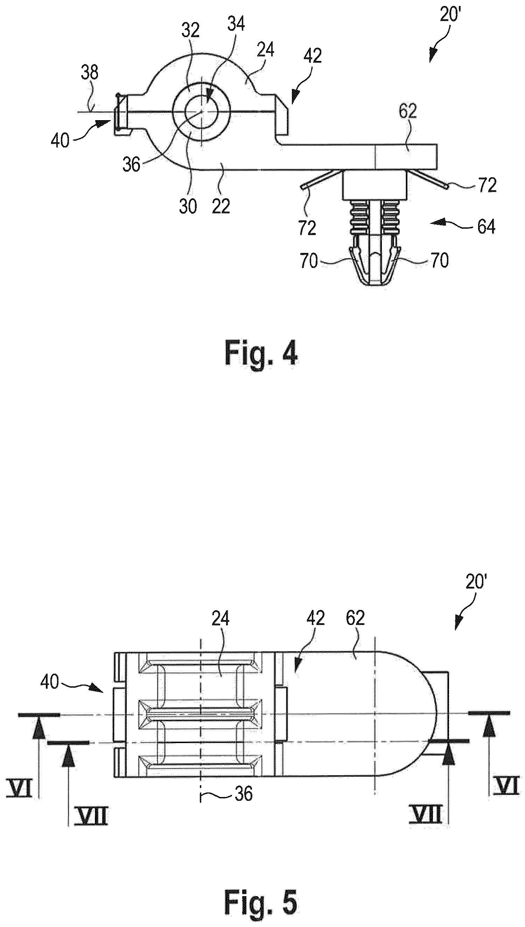

The base receptacle 26 and the lid receptacle 28, in a closed configuration as shown in Fig. 4, form a circular holding portion 34 which defines a holding axis 36 which is coaxial to the brake line 12 held therein.

The base portion 22 and the lid portion 24, in the closed configuration, contact each other along a closure plane 38. The closure plane 38 is aligned approximately parallel to an underside of the base portion 22, which is to be placed upon the sheet part 10 onto which the plastic clip 20 is to be arranged.

The base portion 22 and the lid portion 24 are connected to each other in the closed configuration by means of a first connection portion 40 and a second connection portion 42. The connection portions 40, 42 are arranged on opposite sides of the holding axis 36.

The first connection portion 40 comprises a first locking nose 44 which is a part of the lid portion 24. Further, the first connection portion 40 comprises a first locking shoulder 46 which is formed by the base portion 22.

Correspondingly, the second connection portion 42 comprises a first locking nose 44, which is a part of the lid portion 24. The second connection portion 42, further, comprises a first locking shoulder 46 which is formed by the base portion 22.

In the closed configuration, as shown for example in Figs. 4, 6 and 7, the locking noses 44, 50 engage the respective locking shoulders 46, 52 so as to form a positive locking engagement between the base portion 22 and the lid portion 24.

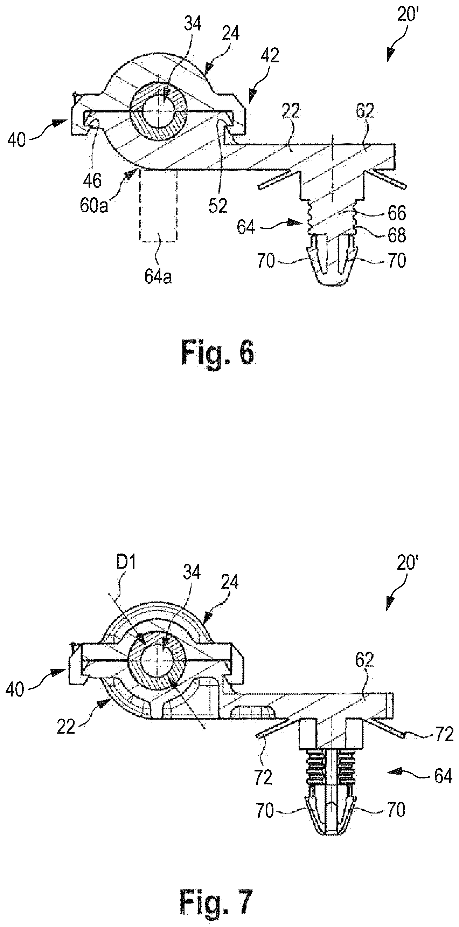

An inner diameter DI of the circular holding portion 34 (Fig. 7) is preferably equal or smaller than the outer diameter DA (Fig. 1a) of the brake line. It is to be noted that the brake line 12 is one example of a longitudinal element. The plastic clip 20' can be used for holding other longitudinal elements as well.

The base portion 22 and the lid portion 24 are connected to each other by an integral hinge 48 which is best shown in Figs. 2 and 3.

The integral hinge 48 comprises two hinge portions that are spaced from each other along an axis parallel to the holding axis 36. The first connection portion 40 is arranged between the hinge portions of the integral hinge 48.

The integral hinge 48 allows to establish an open configuration of the plastic clip 20' as shown for example in Fig. 2 and 3, or the closed configuration of Figs. 4, 5, 6, and 7.

The base portion 22 and the lid portion, together with the integral hinge 48, are made from a first material, preferably PA, in particular PA 66.

The jacket portions 30, 32 are preferably made of a rubber material or a thermoplastic elastomer (TPE) such as TPS.

The jacket portions 30, 32 and the remaining part of the plastic clip can be produced by means of a 2K-injection molding method. The jacket portions 30, 32 are safely held and not detachable from the respective receptacle 26, 28.

The base portion 22 comprises a support portion 60 from which a rivet protrusion 64 protrudes.

The support portion 60 is formed at the underside of an extension portion 62 of the base portion 22. The extension portion 62 is a plate like portion which extends along a plane that is essentially tangential to the holding axis 36. An underside of a main part of the base portion 22 and an underside of the extension portion 22 are formed to be contiguous.

The rivet protrusion 64 is formed such that its extension direction is tangential to the holding axis 36.

As is shown in Fig. 6, the support portion 60a may be formed directly under a main part of the base portion 22, so that the rivet protrusion 64a extends from the support portion 60 such that its extension direction intersects the holding axis 36.

In some cases, two rivet protrusions 64, 64a may be provided. In other embodiments, only one of the two rivet protrusions 64, 64a is provided.

As is shown particularly in Fig. 6 and 7, the rivet protrusion 64 comprises a shaft 66 which is formed integral with the support portion 60.

An outer circumference of the shaft 66 is provided with annular undulations 68.

At a free end of the rivet protrusion 64, a number of locking tongues 70 are provided that can be radially deflected. Upon insertion into a threaded hole, the locking tongues 70 deflect and are urged elastically against the inner side of the thread or against a shoulder of the sheet part, so as to establish a locking connection between the rivet protrusion 64 and the threaded hole 14.

The support portion 60 may include at least one wing 72. In the present case, two wings 72 are provided on opposite sides of the rivet protrusion 64. The wings are axially elastically deflectable. When inserting the rivet protrusion 64 into the threaded hole 14, the wings 72 deflect against the upper side of the sheet part 10 and provide a pre-tension for the locking engagement between the locking tongues 70 and the internal thread of the hole 14.

It is to be noted that the wings 72 are optional in this case.

The plastic clip 20 can be used to form a pre-assembled brake line arrangement as will be described later.

Particularly, the plastic clip 20 can be attached to a brake line at a certain pre-defined attachment position along the extension of the brake line. During assembly of the brake line to a vehicle, the plastic clip is already in the correct axial position and may be turned slightly around the holding axis in order to insert the rivet protrusion 64 into a threaded hole of the perforated sheet part, particularly of a vehicle body sheet part.

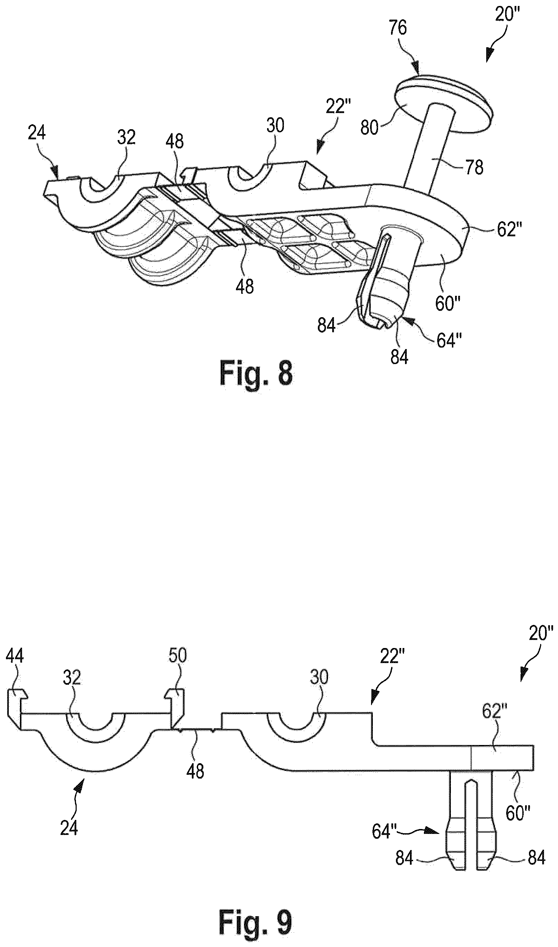

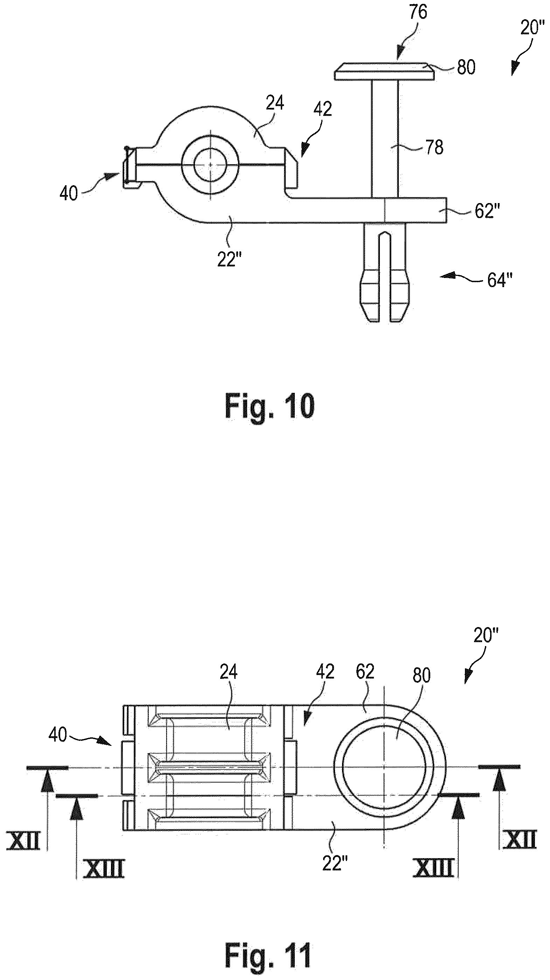

Figs. 8 to 13 show an alternative embodiment of a plastic clip 20" which corresponds with regard to design and function generally to the plastic clip 20' of Figs. 3 to 7. Same elements are therefore assigned identical reference numerals. In the following, mainly the differences are described.

The plastic clip 20" is identical to the plastic clip 20' regarding its circular holding portion 34 which is formed by the receptacle 26, 28 and the respective jacket portions 30, 32. Also, the base portion 22 and the lid portion 24 are connected to each other via an integral hinge.

While the embodiment of Figs. 3 to 7 includes a solid shaft 66, the rivet protrusion 64" of the plastic clip 20" includes two rivet tongues 84.

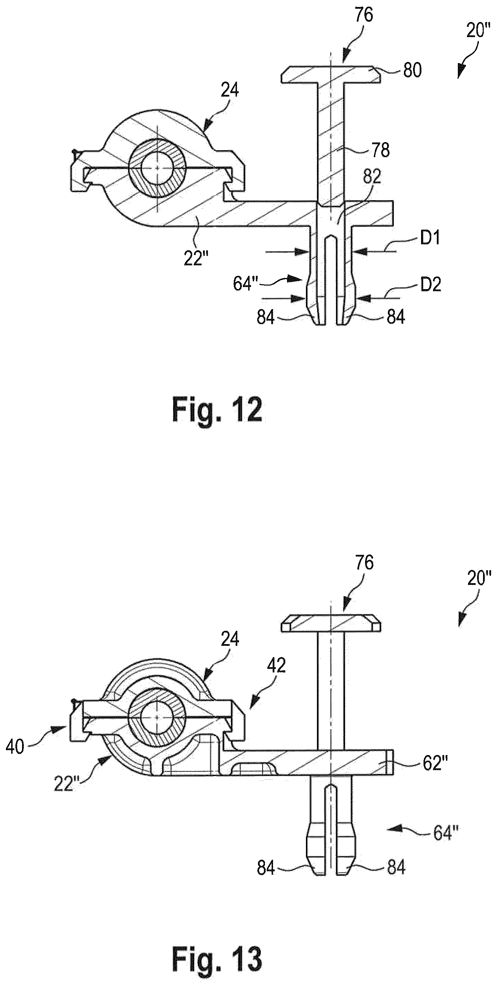

A pin hole 82 is provided in the base portion 22, particularly in the extension portion 62" thereof. A pin shaft 78 of pin 76 is partly inserted into the pin hole 82, as is particularly shown in Fig. 12.

When manufacturing the plastic clip, the pin 76 may be co-injected, such that it is connected via at least one small web to the extension portion 62". In other embodiments, the pin 76 may be a separate part.

The pin 76 may have a pin head 80 with an enlarged diameter, or may be a simple pin with a uniform outer diameter.

The rivet tongues 84 have a first section which extends from the extension portion 62" to approximately a middle part thereof, and a second section which is formed by the free ends of the rivet tongues 84.

In the first section, the rivet tongues essentially define an internal diameter which corresponds to the outer diameter of the pin shaft 78. Therefore, the pin shaft 78 can be inserted through the pin hole 82 and into the rivet tongues without deflecting the rivet tongues 84.

In the second section, which is formed by the free end of the rivet tongues 84, an internal diameter defined by the rivet tongues 84 is smaller than an outer diameter of the pin shaft 78. When the pin shaft 78 reaches the second section, the rivet tongues 84 are spread radially apart from each other. In this case, the radially outer sides of the rivet tongues 84 engage the internal thread 16 so as to fix the clip 20" to the sheet part 10.

In the second section, the outer diameter D2 is larger than the outer diameter D1 in the first section of the rivet tongues 84.

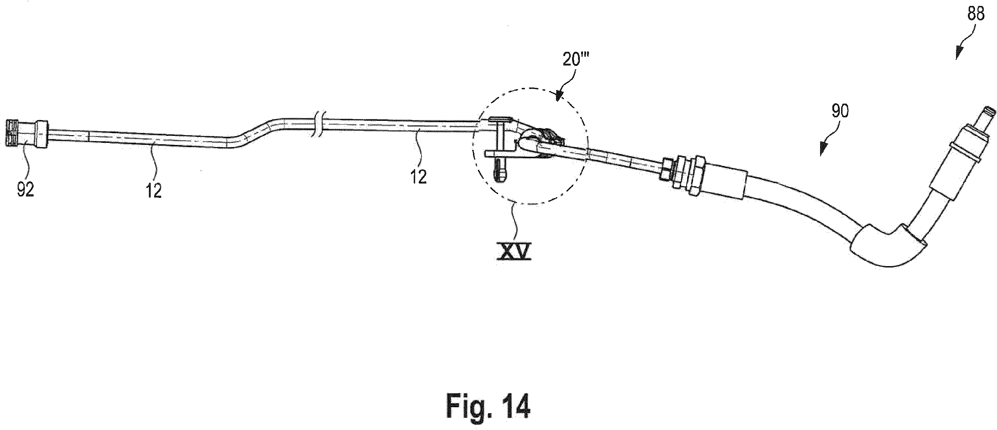

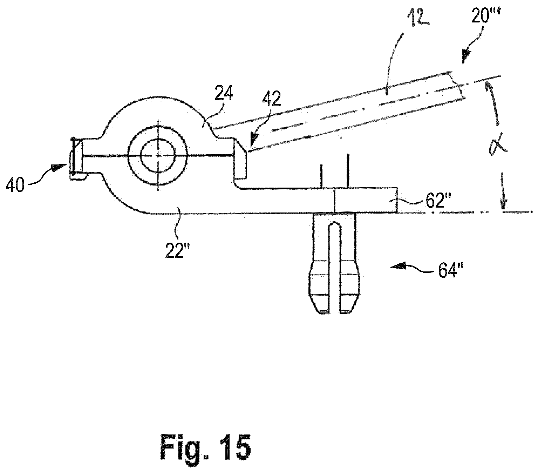

In Fig. 14 and 15 there is shown a pre-mounted brake line arrangement 88 which includes a brake line 12, a first brake line connector 90 attached to one end of the brake line 12 and a second brake line connector 92 attached to a second end of the brake line 12.

In an area between the first and second connectors 90, 92, a plastic clip 20‴ is pre-mounted to the brake line 12.

The plastic clip 20‴ may be formed by any of the above described plastic clips 20, 20', 20". The plastic clip 20‴ is preferably identical to the plastic clip of Figs. 8 to 13.

The plastic clip 20‴ is mounted to the brake line 12 such that a certain part of the brake line 12 is arranged under an angle α of larger than 0° and smaller than 45° with respect to a plane that is defined by the extension portion 62‴.

### Reference number list

- 2: vehicle
- 4: wheel
- 6: brake disk
- 8: brake system
- 10: vehicle body sheet (perforated sheet part)
- 10a: nut
- 12: brake line/hose (longitudinal element)
- 14: hole
- 16: inner thread
- 18: protrusion
- 20: plastic clip/bracket
- 22: base portion
- 24: lid portion
- 26: base receptacle
- 28: lid receptacle
- 30: base jacket portion
- 32: lid jacket portion
- 34: circular holding portion
- 36: holding axis
- 38: closure plane
- 40: first connection portion 22/24
- 42: second connection portion 22/24
- 44: first locking nose of 40
- 46: first locking shoulder of 22
- 48: integral hinge
- 50: second locking nose of 42
- 52: second locking shoulder of 22

- 60: support portion of 22
- 62: extension portion of 22
- 64: rivet protrusion
- 66: shaft
- 68: annular undulations
- 70: locking tongues
- 72: wings

- 76: pin
- 78: pin shaft
- 80: pin head
- 82: pin hole in 22
- 84: rivet tongues
- 88: Pre-mounted brake line arrangement
- 90: first brake line connector
- 92: second brake line connector
- 94: protection wall portion of 22‴

- BF: braking fluid
- DA: outer diameter 12
- DI: inner diameter 34
- FH: axial holding force
- TB: bending torque
- FA: attachment force
- D1: first outer diameter 64"
- D2: second outer diameter 64"

- α: angle

## Claims

1. Pre-assembled fluid line arrangement (88), comprising a fluid line (12) for guiding fluid (BF) and at least one plastic clip (20) for attaching the fluid line (12) to a perforated sheet part (10) of a body part of a vehicle, wherein the plastic clip (20) comprises:
- a base portion (22) and a lid portion (24) connectable or hingedly connected to the base portion (22) so as to establish an open configuration or a closed configuration, wherein the base portion (22) has a semi-circular base receptacle (26) for the fluid line (12), wherein the lid portion (24) has a semi-circular lid receptacle (28) for the fluid line (12), wherein the base receptacle (26) and the lid receptacle (28), in the closed configuration, together form a circular holding portion (34) for the longitudinal element (12), wherein at least one of the base receptacle (26) and the lid receptacle (28) is provided with a jacket portion (30, 32) which is made from a material that is softer than the material of the respective receptacle (26, 28),
- wherein the base portion (22) comprises a support portion (60) from which projects a plastic rivet protrusion (64) adapted to be inserted into a hole (14) of the perforated sheet part (10) in an attachment step for attaching the fluid line (12) to the perforated sheet part (10),
- wherein the base portion (22) and the lid portion (24), in the closed configuration, are connected via a first connection portion (40) and a second connection portion (42),
- wherein the first and the second connection portions (40, 42) are arranged on opposite sides of the circular holding portion (34),
- wherein the first and the second connection portions (40, 42) each comprise a locking nose (44, 50) at one of the base portion (22) and the lid portion (24), and a locking shoulder (46, 52) at the other of the base portion (22) and the lid portion (24), and
wherein the plastic clip (20) is closed so that the circular holding portion (34) encloses the fluid line (12) and is pre-mounted thereto at a pre-defined attachment position along the extension of the fluid line (12) and the plastic rivet protrusion (64) is not yet inserted into the hole (14) of the perforated sheet part (10).

2. Pre-assembled fluid line arrangement (88) according to claim 1, wherein the support portion (60a) is provided at an underside of a main part of the base portion (22) and/or wherein the support portion (60) is provided at an extension portion (62) of the base portion (22).

3. Pre-assembled fluid line arrangement (88) according to claim 1 or 2, wherein the base portion (22) and the lid portion (24) are connected via an integral hinge (48).

4. Pre-assembled fluid line arrangement (88) according to any one of claims 1 to 3, wherein the rivet protrusion (64) comprises a shaft (66).

5. Pre-assembled fluid line arrangement (88) according to claim 4, wherein at least one locking tongue (70) is provided in a region of a front tip of the shaft (66).

6. Pre-assembled fluid line arrangement (88) according to claim 4 or 5, wherein the shaft (66) has a number of annular undulations (68).

7. Pre-assembled fluid line arrangement (88) according to any one of claims 1 to 3, wherein the rivet protrusion (64") comprises two rivet tongues (84) that are radially spreadable.

8. Pre-assembled fluid line arrangement (88) according to claim 7, wherein the base portion (22) comprises a hole aligned with the rivet tongues (84) such that a pin shaft (78) may be inserted between the rivet tongues (84) so as to spread them radially apart from each other.

9. Pre-assembled fluid line arrangement (88) according to any one of claims 1 to 8, wherein the plastic clip (20) is a 2K-plastic clip and/or wherein at least one jacket portion (30, 32) is made of a rubber material or a TP material.

10. A method of attaching a fluid line (12) for guiding fluid (BF) to a perforated sheet part (10) of a body part of a vehicle, comprising the steps of:
providing pre-assembled fluid line arrangement (88) according to any one of claims 1 to 9; and
attaching the plastic clip (20) to the perforated sheet part (10), wherein the attachment step includes inserting the rivet protrusion (64) into a hole (14) of the perforated sheet part (10).

## Patentansprüche

1. Vormontierte Fluidleitungsanordnung (88), umfassend eine Fluidleitung (12) zum Leiten eines Fluids (BF) und mindestens einen Kunststoffclip (20) zum Befestigen der Fluidleitung (12) an einem gelochten Blechbauteil (10) eines Karosserieteils eines Fahrzeugs, wobei der Kunststoffclip (20) Folgendes umfasst:
- einen Basisteil (22) und einen Deckelteil (24), die miteinander verbindbar oder schwenkbar miteinander verbunden sind, um eine offene Konfiguration oder eine geschlossene Konfiguration herzustellen, wobei der Basisteil (22) eine halbkreisförmige Basisaufnahme (26) für die Fluidleitung (12) aufweist, wobei der Deckelteil (24) eine halbkreisförmige Deckelaufnahme (28) für die Fluidleitung (12) aufweist, wobei die Basisaufnahme (26) und die Deckelaufnahme (28) in der geschlossenen Konfiguration zusammen einen kreisförmigen Halteabschnitt (34) für das Längselement (12) bilden, wobei mindestens eine der Basisaufnahme (26) und der Deckelaufnahme (28) mit einem Mantelabschnitt (30, 32) versehen ist, der aus einem Material hergestellt ist, das weicher ist als das Material der jeweiligen Aufnahme (26, 28),
- wobei der Basisteil (22) einen Stützabschnitt (60) umfasst, von dem ein Kunststoffnietvorsprung (64) ausgeht, der dazu ausgebildet ist, in einem Befestigungsschritt zum Befestigen der Fluidleitung (12) an dem gelochten Blechbauteil (10) in ein Loch (14) des gelochten Blechbauteils (10) eingeführt zu werden,
- wobei der Basisteil (22) und der Deckelteil (24) in der geschlossenen Konfiguration über einen ersten Verbindungsabschnitt (40) und einen zweiten Verbindungsabschnitt (42) miteinander verbunden sind,
- wobei der erste und der zweite Verbindungsabschnitt (40, 42) auf gegenüberliegenden Seiten des kreisförmigen Halteabschnitts (34) angeordnet sind,
- wobei der erste und der zweite Verbindungsabschnitt (40, 42) jeweils an einem von dem Basisteil (22) und dem Deckelteil (24) eine Verriegelungsnase (44, 50) und an dem anderen von dem Basisteil (22) und dem Deckelteil (24) eine Verriegelungsschulter (46, 52) aufweisen, und
- wobei der Kunststoffclip (20) geschlossen ist, sodass der kreisförmige Halteabschnitt (34) die Fluidleitung (12) umschließt und daran an einer vorbestimmten Befestigungsposition entlang der Erstreckung der Fluidleitung (12) vormontiert ist und der Kunststoffnietvorsprung (64) noch nicht in das Loch (14) des gelochten Blechbauteils (10) eingeführt ist.

2. Vormontierte Fluidleitungsanordnung (88) nach Anspruch 1, wobei der Stützabschnitt (60a) an einer Unterseite eines Hauptteils des Basisteils (22) vorgesehen ist und/oder wobei der Stützabschnitt (60) an einem Verlängerungsabschnitt (62) des Basisteils (22) vorgesehen ist.

3. Vormontierte Fluidleitungsanordnung (88) nach Anspruch 1 oder 2, wobei der Basisteil (22) und der Deckelteil (24) über ein integrales Scharnier (48) miteinander verbunden sind.

4. Vormontierte Fluidleitungsanordnung (88) nach einem der Ansprüche 1 bis 3, wobei der Nietvorsprung (64) einen Schaft (66) umfasst.

5. Vormontierte Fluidleitungsanordnung (88) nach Anspruch 4, wobei mindestens eine Verriegelungszunge (70) in einem Bereich einer vorderen Spitze des Schafts (66) vorgesehen ist.

6. Vormontierte Fluidleitungsanordnung (88) nach Anspruch 4 oder 5, wobei der Schaft (66) mehrere ringförmige Wellen (68) aufweist.

7. Vormontierte Fluidleitungsanordnung (88) nach einem der Ansprüche 1 bis 3, wobei der Nietvorsprung (64") zwei radial aufspreizbare Nietzungen (84) umfasst.

8. Vormontierte Fluidleitungsanordnung (88) nach Anspruch 7, wobei der Basisteil (22) ein Loch aufweist, das mit den Nietzungen (84) fluchtet, sodass ein Stiftschaft (78) zwischen die Nietzungen (84) eingeführt werden kann, um diese radial voneinander weg aufzuspreizen.

9. Vormontierte Fluidleitungsanordnung (88) nach einem der Ansprüche 1 bis 8, wobei der Kunststoffclip (20) ein 2K-Kunststoffclip ist und/oder wobei mindestens ein Mantelabschnitt (30, 32) aus einem Gummimaterial oder einem TP-Material hergestellt ist.

10. Verfahren zum Befestigen einer Fluidleitung (12) zum Leiten eines Fluids (BF) an einem gelochten Blechbauteil (10) eines Karosserieteils eines Fahrzeugs, umfassend die Schritte:
Bereitstellen einer vormontierten Fluidleitungsanordnung (88) nach einem der Ansprüche 1 bis 9; und
Befestigen des Kunststoffclips (20) an dem gelochten Blechbauteil (10), wobei der Befestigungsschritt das Einführen des Nietvorsprungs (64) in ein Loch (14) des gelochten Blechbauteils (10) umfasst.

## Revendications

1. Dispositif pré-assemblé de conduite de fluide (88), comprenant une conduite de fluide (12) pour guider du fluide (BF) et au moins une attache en plastique (20) pour fixer la conduite de fluide (12) à une partie tôle perforée (10) d'une partie carrosserie d'un véhicule, dans lequel l'attache en plastique (20) comprend :
- une partie base (22) et une partie couvercle (24) pouvant être reliée ou reliée de manière articulée à la partie base (22) de manière à établir une configuration ouverte ou une configuration fermée, dans lequel la partie base (22) a un réceptacle de base semi-circulaire (26) pour la conduite de fluide (12), dans lequel la partie couvercle (24) a un réceptacle de couvercle semi-circulaire (28) pour la conduite de fluide (12), dans lequel le réceptacle de base (26) et le réceptacle de couvercle (28), dans la configuration fermée, forment ensemble une partie de maintien circulaire (34) pour l'élément longitudinal (12), dans lequel au moins l'un parmi le réceptacle de base (26) et le réceptacle de couvercle (28) est pourvu d'une partie enveloppe (30, 32) qui est faite d'un matériau qui est plus souple que le matériau du réceptacle respectif (26, 28),
- dans lequel la partie base (22) comprend une partie support (60) d'où fait saillie une saillie de rivet en plastique (64) adaptée à être insérée dans un trou (14) de la partie tôle perforée (10) lors d'une étape de fixation pour fixer la conduite de fluide (12) à la partie tôle perforée (10),
- dans lequel la partie base (22) et la partie couvercle (24), dans la configuration fermée, sont reliées par l'intermédiaire d'une première partie de liaison (40) et d'une seconde partie de liaison (42),
- dans lequel la première et la seconde partie de liaison (40, 42) sont agencées sur des côtés opposés de la partie de maintien circulaire (34),
- dans lequel la première et la seconde partie de liaison (40, 42) comprennent chacune un nez de verrouillage (44, 50) au niveau de l'une de la partie base (22) et de la partie couvercle (24), et un épaulement de verrouillage (46, 52) au niveau de l'autre de la partie base (22) et de la partie couvercle (24), et
dans lequel l'attache en plastique (20) est fermée de sorte que la partie de maintien circulaire (34) entoure la conduite de fluide (12) et est prémontée à celle-ci au niveau d'une position de fixation prédéfinie le long de l'extension de la conduite de fluide (12) et la saillie de rivet en plastique (64) n'est pas encore insérée dans le trou (14) de la partie tôle perforée (10).

2. Dispositif pré-assemblé de conduite de fluide (88) selon la revendication 1, dans lequel la partie support (60a) est prévue au niveau d'une face inférieure d'une partie principale de la partie base (22) et/ou dans lequel la partie support (60) est prévue au niveau d'une partie extension (62) de la partie base (22).

3. Dispositif pré-assemblé de conduite de fluide (88) selon la revendication 1 ou 2, dans lequel la partie base (22) et la partie couvercle (24) sont reliées par l'intermédiaire d'une charnière intégrale (48).

4. Dispositif pré-assemblé de conduite de fluide (88) selon l'une quelconque des revendications 1 à 3, dans lequel la saillie de rivet (64) comprend un arbre (66).

5. Dispositif pré-assemblé de conduite de fluide (88) selon la revendication 4, dans lequel au moins une languette de verrouillage (70) est prévue dans une région d'une extrémité avant de l'arbre (66).

6. Dispositif pré-assemblé de conduite de fluide (88) selon la revendication 4 ou 5, dans lequel l'arbre (66) a un certain nombre d'ondulations annulaires (68).

7. Dispositif pré-assemblé de conduite de fluide (88) selon l'une quelconque des revendications 1 à 3, dans lequel la saillie de rivet (64") comprend deux languettes de rivet (84) qui peuvent s'écarter radialement.

8. Dispositif pré-assemblé de conduite de fluide (88) selon la revendication 7, dans lequel la partie base (22) comprend un trou aligné sur les languettes de rivet (84) de telle sorte qu'un arbre de tige (78) peut être inséré entre les languettes de rivet (84) de manière à les écarter radialement l'une de l'autre.

9. Dispositif pré-assemblé de conduite de fluide (88) selon l'une quelconque des revendications 1 à 8, dans lequel l'attache en plastique (20) est une attache en plastique 2K et/ou dans lequel au moins une partie enveloppe (30, 32) est faite d'un matériau en caoutchouc ou d'un matériau TP.

10. Procédé permettant de fixer une conduite de fluide (12) destiné à guider du fluide (BF) sur une partie tôle perforée (10) d'une partie carrosserie d'un véhicule, comprenant les étapes consistant à :
fournir un dispositif pré-assemblé de conduite de fluide (88) selon l'une quelconque des revendications 1 à 9 ; et
fixer l'attache en plastique (20) à la partie tôle perforée (10), dans lequel l'étape de fixation comporte l'insertion de la saillie de rivet (64) dans un trou (14) de la partie tôle perforée (10).
